# EUROPEAN PATENT SPECIFICATION

(11) **EP 3 195 441 B1**
(45) Date of publication and mention of the grant of the patent: **06.03.2019**
(21) Application number: 14777366.7
(22) Date of filing: 16.09.2014
(51) Int. Cl.: H02J 3/38, H02P 9/10, B63H 23/00, F02D 29/06, F02D 31/00, H02P 9/00, H02P 9/04

(54) **A CONTROL METHOD AND SYSTEM FOR DRIVING A POWER ENGINE UNIT EITHER IN A SPEED CONTROL MODE OR IN A LOAD CONTROL MODE, AND CHANGING THE CONTROL MODE**
STEUERUNGSVERFAHREN UND -SYSTEM ZUM BETREIBEN EINER KRAFTMASCHINENEINHEIT WAHLWEISE IN EINEM DREHZAHLSTEUERUNGSMODUS ODER EINEM LASTSTEUERUNGSMODUS UND ZUM WECHSELN DES STEUERUNGSMODUS
PROCÉDÉ ET SYSTÈME DE FONCTIONNEMENT D'UNE MACHINE SOIT EN MODE DE COMMANDE DE VITESSE OU EN MODE DE COMMANDE DE CHARGE ET MODIFICATION DE MODE DE CONTRÔLE

(43) Date of publication of application: 26.07.2017
(73) Proprietor: Wärtsilä Finland Oy, 65100 Vaasa (FI)
(72) Inventor: SAIKKONEN, Ari, 65100 Vaasa (FI); KAAS, Tom, 65100 Vaasa (FI)
(74) Representative: Berggren Oy, Helsinki & Oulu
(86) International application number: PCT/FI2014/050707
(87) International publication number: WO 2016/042199

(56) References cited:
- WO-A1-2009/083639
- WO-A1-2014/096537
- WO-A2-2009/083640
- US-A1- 2011 062 708
- S. David Alley: "Generator Basics - Applied to Field Problems", , 1 September 1993 (1993-09-01), XP055110739, Retrieved from the Internet: URL:http://www.annainc.com/pdfs/genBasics. PDF [retrieved on 2014-03-28]

## Description

### Field of technology

The present invention relates to method and system driving a power engine unit. The power engine unit is a combination of an engine producing power and a generator transforming power to an electric form. The engine can, for example, be a reciprocating engine, like a diesel engine. Especially the invention relates to a control method and system for driving a power engine unit either in a speed control mode or in a load control mode, and changing the control mode.

### Prior art

A power plant can comprise several power engine units in order to produce power to be delivered to the grid. A number of power plants and power engine units can be connected to the grid. The grid distributes the produced power to consumers of the grid. A normal solution in the power plants is that the power engine units are connected to a bus bar of the power plant. The bus bar is, for example, a rail or cable. The bus bar is in connection with the circuit breaker that is called grid breaker through which the power is transmitted to the grid.

The power engine units can mainly run in two modes, namely in a speed control mode or in a load control mode. The speed control mode keeps a rotation speed of the power engine unit in a desired value (called a reference value). So, the power engine units keeps it's speed in the desired value, but the power production of the unit may vary. On the other hand, the load control mode of the power engine unit keeps the power production in a desired value, but the speed of the unit may vary. It is worthwhile to note that these two modes provide two categories, which can comprise more control modes with different names. For example a droop control mode belongs to the category of the speed control mode, and kW control mode and MW control mode belong to the category of the load control mode.

In order to keep the grid in function, i.e. being stable to transmit power from the power engine units to loads of consumers, the power engine units are commonly driven in the speed control mode. However the power engine unit or units running in the load control mode may also be in connection with the grid. A need for using the load control mode, like True kW mode, may occur in a ship power installation when a shaft generator is used as an electrical motor rotating propeller via the same gear box where the main engine is connected. In this case one or several auxiliary engine is run in True kW mode supplying electricity to the shaft motor. In this case it is necessary that the main engine is much larger than the auxiliary engines and that the main engine is run in speed control mode, typically in isochronous load sharing speed mode. Benefit for this kind of concept is to have stable power production for the electric motor.

As said above, in the power plants the power engine units are connected to a bus bar of the power plant. There occur situations in the power plants or in ships, for example, when the current control mode of a power engine unit needs to be changed to another control mode. For example, there is periodical need for washing turbo chargers of a medium speed diesel and gas engine. In this situation load production will vary due to disturbances in turbo charger speed. This issue can be avoided by setting the engine to run in True kW mode because then the load production will be stable even though the process is disturbed by washing the turbo chargers. However, the change of the control mode may create stability problems in the power plant and/or in the grid.

Document WO 2014/096537 A1 discloses a method for driving power engine units of a local power network either in a speed control mode or in a load control mode. In an event of disconnection of the power network from a grid, the control mode is changed from a kW mode-being a load control mode - to a speed droop mode.

Moreover, document US 2011/062708 A1 discloses that a large load change on a power grid can cause rapid destabilization of connected power units, particularly low inertia aero-derivative turbine generators. In order to improve the stability, D2 proposes that a boost mode can be executed to increase power output of the power units in response to such a grid destabilizing event, helping to reduce frequency decay before a threshold is exceeded.

Furthermore, document WO 2009/083640 A2 discloses a communication bus (such as CAN bus) for data communication between power engine units.

### Short description of invention

The aim of the invention is to alleviate the problems occurring when the control mode of the power engine unit is going to be changed from the speed control mode to the load control mode. The aim is achieved in ways of the independent claims. The dependent claims describe different embodiments of the invention.

The control method according to the invention for driving a power engine unit either in a speed control mode or in a load control mode, and changing the control mode, comprises a step of sending control mode data of the power engine units and receiving control mode data of other power engine units being connected electrically with each other. The method further has a step of determining whether predetermined amount from the total moment of inertia of all power engine units electrically connected with each other is running in the speed control mode after the change of the control mode, in case of changing the control mode of the power engine unit from the speed control mode to the load control mode. And yet further, the method has a step of changing the control mode of the power engine unit if the determining step indicates that at least said predetermined amount is running in the speed control mode.

### List of figures

In the following, the invention is described in more detail by reference to the enclosed drawings, where
- Figure 1: illustrates an example of a typical ship power grid,
- Figure 2: illustrates a table relating to the grid of Figure 1 and illustrating the inventive idea,
- Figure 3: illustrates a flow chart example of the method according to the invention, and
- Figure 4: illustrates an example of a control system according to the invention.

### Description of the invention

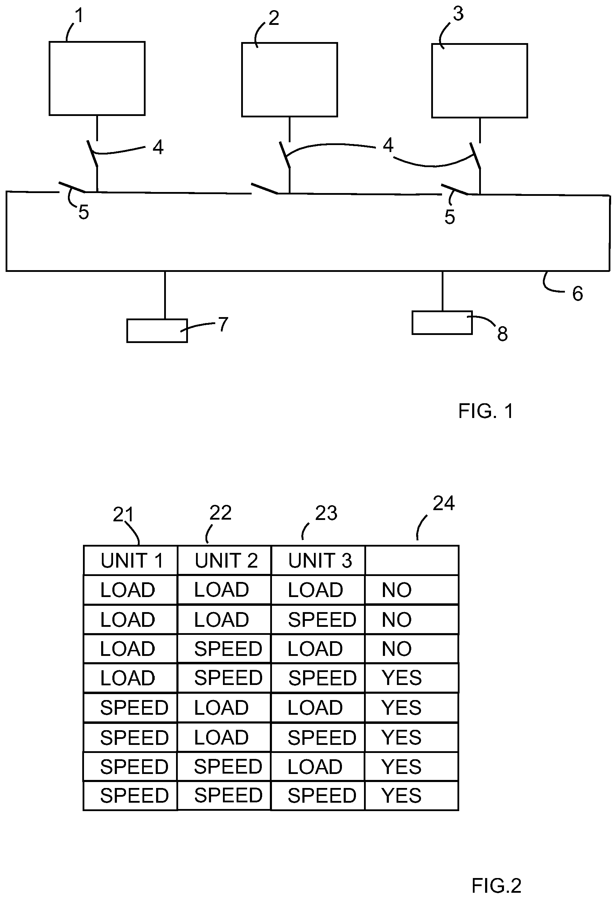

Figure 1 illustrates an example of a typical power grid installation on a ship. In this example three power engine units 1, 2, 3 has been connected to the bus bar/grid 6 via generators breakers 4. The bus bar (providing a simple grid in this example) has also bus bar breakers 5 in order to divide the bar into several parts. It should be keep in mind that this example illustrates a very simple structure. Loads 7, 8 are connected into the bus bar/grid in order to consume power that is created by the power engine units 1, 2, 3. So, power engine units share the total load 7, 8 of the bus bar/grid.

If the load control mode is wanted to be used instead of the speed control mode in any of the power engine units, checking is done in order to make sure that enough mass or inertia of the power engine units is run in the speed control mode, i.e. in Isochronous Load Sharing mode in this example. Predetermined amount from the total moment of inertia of all power engine units electrically connected with each other or more should be in the speed control mode after the change of the control mode. In this way it is ensured that power production after the change remains stable.

Let's say that inertia of the first power engine unit 1 of Figure 1 is 1000 kgm², the inertia of the second power engine unit is 500 kgm², and the inertia of the third power engine unit is also 500 kgm². Let's further determine that the speed control mode / load control mode relation of inertia is limited to be 50 % or more of the total inertia that should be run in the speed control mode. In other words, the predetermined amount of the total inertia is 50 %, i.e. half.

When changing the mode the engine control system checks weather the speed control mode/load control mode ratio condition is fulfilled and prohibits or allows the engine to go to the load control mode. Figure 2 shows a table illustrating possible combinations of the control modes of the power engine units. The table has been formed by using the above said inertia values and the predetermined amount. The first column 21 shows the control mode of the first unit 1, the second column 22 shows the control mode of the second unit 2, and the third column 23 shows the control mode of the third unit 3. The fourth column shows the possible combinations. For example on the fourth data row, the first power engine unit 1 having inertia 1000 kgm² runs in the load control mode, and the second and third power engine units run in the speed control mode, both having inertia 500 kgm². So, 1000 kgm², i.e. half of the total inertia (2000 kgm²) runs in the speed control mode, and therefore it is allowed to change the control mode of the first unit 1 from the speed control mode to the load control mode.

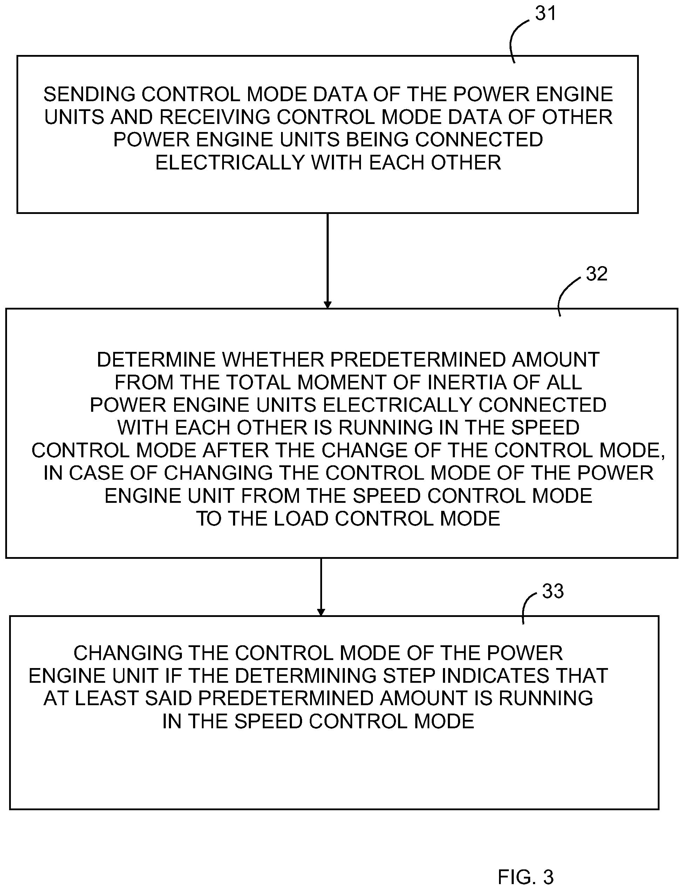

Figure 3 illustrates the method according to the invention. The control method is for driving the power engine unit either in the speed control mode or in the load control mode, and changing the control mode. However in the invention, the change of the control mode comprises further steps. The method has a step of sending control mode data of the power engine units and receiving control mode data of other power engine units being connected electrically with each other 31.

The division of the bus bar/grid may not be known, because the division may vary due to different consumption situations of the grid, engine specific power productions, etc. So, a typical situation is that the division of the bus bar of a power plant or a ship is not known, and further it is not known into which part or parts the local load or loads are connected. The division of the bus bar/grid needs to be known in the solution in order to know the groups of power engine units that are electrically connected with each other. This can be achieved by the way of teaching of WO 2009083639 whose content is as reference added to this description. So, the groups can, for example, be determined according the WO publication.

The method has also a step of determining whether predetermined amount from the total moment of inertia of all power engine units electrically connected with each other is running in the speed control mode after the change of the control mode, in case of changing the control mode of the power engine unit from the speed control mode to the load control mode 32. As illustrated in the above example, predetermined amount can be at least half of the total moment of inertia of all power engine units electrically connected with each other. Other amounts can also be used as the predetermined amount.

The method further comprises a step of changing the control mode of the power engine unit, if the determining step indicates that at least said predetermined amount is running in the speed control mode 33. If the determining step indicates that less than the predetermined amount from the total amount of inertia of all power engine units electrically connected with each other is running in the speed control mode, the change of the control mode is not proceed.

The inertia of all power engine units can be utilized from memory of the power engine unit or from said memory and communication among the power engine units. If the grid structure is very simple and quite fixed, the memory of the power engine unit can contain reliable inertia data of the other units. The memory contains the inertia data of the unit itself, of course.

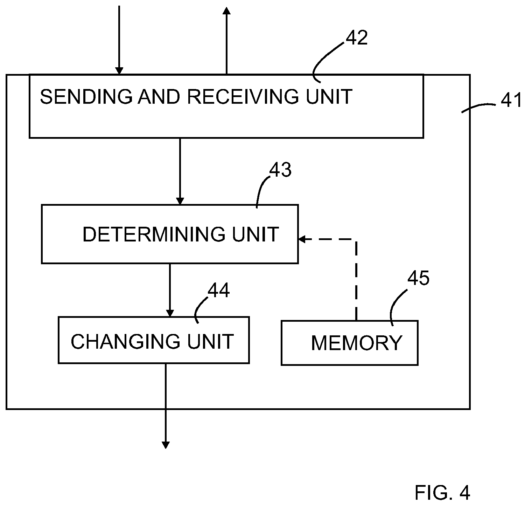

Figure 4 illustrates a control system 41 to drive a power engine unit either in a speed control mode or in a load control mode, and to change the control mode. The control system comprises a sending and receiving unit 42 to send control mode data of the power engine unit and to receive control mode data of other power engine units being connected electrically with each other. The system has also a determining unit 43 to determine whether predetermined amount from the total moment of inertia of all power engine units electrically connected with each other is running in the speed control mode after the change of the control mode. In case of changing the control mode of the power engine unit from the speed control mode to the load control mode, the determining unit 43 utilizes control mode data from the sending and receiving unit 42.

The system comprises also a changing unit 44 to change the control mode of the power engine unit. The changing unit is arranged to proceed the change of the control if the determining unit indicates that at least said predetermined amount is running in the speed control mode. As already said the predetermined amount can be at least half of the total moment of inertia of all power engine units electrically connected with each other.

The control system can also comprise a memory 45. The inertia of all power engine units can be utilized from the memory of the power engine unit as explained above or from said memory and communication among the power engine units. If the determining unit indicates that less than the predetermined amount from the total amount of inertia of all power engine units electrically connected with each other is running in the speed control mode, the changing unit is arranged not to proceed the change of the control mode.

## Claims

1. A control method for driving a power engine unit (1, 2, 3) either in a speed control mode or in a load control mode, and changing the control mode,
**characterised in that**, the change of the control mode comprises steps of
sending control mode data of the power engine unit (1, 2, 3) and receiving control mode data of other power engine units (1, 2, 3) being connected electrically with each other and with the power engine unit (31), determining, utilizing the control mode data, whether a sum of moments of inertia of power engine units running in the speed control mode represents at least a predetermined amount of the total moment of inertia of all power engine units after the change of the control mode, in case of changing the control mode of the power engine unit from the speed control mode to the load control mode (32),
changing the control mode of the power engine unit if the determining step indicates that at least said predetermined amount is reached (33).

2. A control method according to claim 1, **characterised in that**, in the step of determining said predetermined amount is at least half of the total moment of inertia of all power engine units electrically connected with each other.

3. A control method according to claim 1 or 2, **characterised in that** said inertia of all power engine units is utilized from memory of the power engine unit or from said memory and communication among the power engine units.

4. A control method according to claim 1, 2 or 3, **characterised in that**, if the determining step indicates that less than the predetermined amount from the total amount of inertia of all power engine units electrically connected with each other is running in the speed control mode, the change of the control mode is not proceeded.

5. A control system (41) to drive a power engine unit (1, 2, 3) either in a speed control mode or in a load control mode, and to change the control mode,
**characterised in that**, the control system comprises
a sending and receiving unit (42) to send control mode data of the power engine unit and to receive control mode data of other power engine units being connected electrically with each other and the power engine unit (1, 2, 3),
a determining unit (43) to determine whether a sum of moments of inertia of power engine units running in the speed control mode represents at least a predetermined amount of the total moment of inertia of all power engine units after the change of the control mode, in case of changing the control mode of the power engine unit from the speed control mode to the load control mode, the determining unit utilizing control mode data from the sending and receiving unit,
a changing unit (44) to change the control mode of the power engine unit, which changing unit is arranged to proceed the change of the control mode if the determining unit indicates that at least said predetermined amount is reached.

6. A control system according to claim 5, **characterised in that** said predetermined amount is at least half of the total moment of inertia of all power engine units electrically connected with each other.

7. A control system according to claim 5 or 6, **characterised in that** control system comprises a memory (45), and said inertia of all power engine units is utilized from the memory of the power engine unit or from said memory and communication among the power engine units, said sending and receiving unit being arranged to send inertia data of the power engine unit and to receive inertia data of other power engine units being connected electrically with each other.

8. A control system according to claim 5, 6 or 7, **characterised in that**, if the determining unit indicates that less than the predetermined amount from the total amount of inertia of all power engine units electrically connected with each other is running in the speed control mode, the changing unit is arranged not to proceed the change of the control mode.

## Patentansprüche

1. Steuerungsverfahren zum Antreiben einer Kraftmaschineneinheit (1, 2, 3) entweder in einem Drehzahlsteuerungsmodus oder in einem Laststeuerungsmodus und Wechseln des Steuerungsmodus,
**dadurch gekennzeichnet, dass** der Wechsel des Steuerungsmodus folgende Schritte umfasst:
Senden von Steuerungsmodusdaten der Kraftmaschineneinheit (1, 2, 3) und Empfangen von Steuerungsmodusdaten anderer Kraftmaschineneinheiten (1, 2, 3), die elektrisch miteinander und mit der Kraftmaschineneinheit (31) verbunden sind,
Ermitteln, mithilfe der Steuerungsmodusdaten, ob eine Summe von Trägheitsmomenten von Kraftmaschineneinheiten, die in dem Drehzahlsteuerungsmodus laufen, wenigstens eine vorbestimmte Menge des gesamten Trägheitsmoments aller Kraftmaschineneinheiten nach der Änderung des Steuerungsmodus darstellt, im Falle einer Änderung des Steuerungsmodus der Kraftmaschineneinheit von dem Drehzahlsteuerungsmodus zum Laststeuerungsmodus (32),
Ändern des Steuerungsmodus der Kraftmaschineneinheit, wenn der Schritt des Ermittelns darauf hinweist, dass wenigstens die vorbestimmte Menge erreicht ist (33).

2. Steuerungsverfahren nach Anspruch 1, **dadurch gekennzeichnet, dass** in dem Schritt des Ermittelns die vorbestimmte Menge wenigstens die Hälfte des gesamten Trägheitsmoments aller Kraftmaschineneinheiten beträgt, die elektrisch miteinander verbunden sind.

3. Steuerungsverfahren nach Anspruch 1 oder 2, **dadurch gekennzeichnet, dass** die Trägheit aller Kraftmaschineneinheiten aus einem Speicher der Kraftmaschineneinheit oder aus dem Speicher und aus Kommunikation zwischen den Kraftmaschineneinheiten genutzt wird.

4. Steuerungsverfahren nach Anspruch 1, 2 oder 3, **dadurch gekennzeichnet, dass**, wenn der Schritt des Ermittelns darauf hinweist, dass weniger als die vorbestimmte Menge von der Gesamtträgheitsmenge aller Kraftmaschineneinheiten, die elektrisch miteinander verbunden sind, in dem Drehzahlsteuerungsmodus läuft, die Änderung des Steuerungsmodus nicht vorgenommen wird.

5. Steuerungssystem (41), um eine Kraftmaschineneinheit (1, 2, 3) entweder in einem Drehzahlsteuerungsmodus oder in einem Laststeuerungsmodus anzutreiben, und um den Steuerungsmodus zu wechseln,
**dadurch gekennzeichnet, dass** das Steuerungssystem Folgendes umfasst:
eine Sende- und Empfangseinheit (42), um Steuerungsmodusdaten der Kraftmaschineneinheit zu senden und Steuerungsmodusdaten anderer Kraftmaschineneinheiten zu empfangen, die elektrisch miteinander und mit der Kraftmaschineneinheit (1, 2, 3) verbunden sind,
eine Ermittlungseinheit (43) um zu ermitteln, ob eine Summe von Trägheitsmomenten von Kraftmaschineneinheiten, die in dem Drehzahlsteuerungsmodus laufen, wenigstens eine vorbestimmte Menge des gesamten Trägheitsmoments aller Kraftmaschineneinheiten nach der Änderung des Steuerungsmodus nach der Änderung des Steuerungsmodus darstellt, im Falle einer Änderung des Steuerungsmodus der Kraftmaschineneinheit von dem Drehzahlsteuerungsmodus zum Laststeuerungsmodus, wobei die Ermittlungseinheit Steuerungsmodusdaten von der Sende- und Empfangseinheit nutzt,
eine Änderungseinheit (44), um den Steuerungsmodus der Kraftmaschineneinheit zu ändern, wobei die Änderungseinheit dazu eingerichtet ist, die Änderung des Steuerungsmodus vorzunehmen, wenn die Ermittlungseinheit darauf hinweist, dass wenigstens die vorbestimmte Menge erreicht ist.

6. Steuerungssystem nach Anspruch 5, **dadurch gekennzeichnet, dass** die vorbestimmte Menge wenigstens die Hälfte des gesamten Trägheitsmoments aller Kraftmaschineneinheiten beträgt, die elektrisch miteinander verbunden sind.

7. Steuerungssystem nach Anspruch 5 oder 6, **dadurch gekennzeichnet, dass** das Steuerungssystem einen Speicher (45) umfasst und die Trägheit aller Kraftmaschineneinheiten aus dem Speicher der Kraftmaschineneinheit oder aus dem Speicher und aus Kommunikation zwischen den Kraftmaschineneinheiten genutzt wird, wobei die Sende- und Empfangseinheit dazu eingerichtet ist, Trägheitsdaten der Kraftmaschineneinheit zu senden und Trägheitsdaten anderer Kraftmaschineneinheiten zu empfangen, die elektrisch miteinander verbunden sind.

8. Steuerungssystem nach Anspruch 5, 6 oder 7, **dadurch gekennzeichnet, dass**, wenn die Ermittlungseinheit darauf hinweist, dass weniger als die vorbestimmte Menge von der Gesamtträgheitsmenge aller Kraftmaschineneinheiten, die elektrisch miteinander verbunden sind, in dem Drehzahlsteuerungsmodus läuft, die Änderungseinheit dazu eingerichtet ist, die Änderung des Steuerungsmodus nicht vorzunehmen.

## Revendications

1. Procédé de commande pour entraîner une unité de moteur électrique (1, 2, 3) soit dans un mode de contrôle de vitesse soit dans un mode de contrôle de charge et changer le mode de contrôle,
**caractérisé en ce que** le changement du mode de contrôle comprend les étapes
d'envoyer des données de mode de contrôle de l'unité de moteur électrique (1, 2, 3) et de recevoir des données de mode de contrôle d'autres unités de moteur électrique (1, 2, 3) étant connectées électroniquement l'une à l'autre et avec l'unité de moteur électrique (31),
de déterminer, en utilisant les données de mode de contrôle, si une somme des moments d'inertie d'unités de moteur électrique fonctionnant dans le mode de contrôle de vitesse représente au moins une quantité prédéterminée du moment d'inertie total de toutes les unités de moteur électrique après le changement de mode de contrôle, en cas de changement de mode de contrôle de l'unité de moteur électrique du mode de contrôle de vitesse au mode de contrôle de charge (32),
de changer le mode de contrôle de l'unité de moteur électrique si l'étape de détermination indique qu'au moins ladite quantité prédéterminée est atteinte (33).

2. Procédé de contrôle selon la revendication 1, **caractérisé en ce qu'**à l'étape de détermination, ladite quantité prédéterminée fait au moins la moitié du moment d'inertie total de toutes les unités de moteur électrique connectées électriquement l'une à l'autre.

3. Procédé de contrôle selon la revendication 1 ou 2, **caractérisé en ce que** ladite inertie de toutes les unités de moteur électrique est utilisée à partir de la mémoire de l'unité de moteur électrique ou à partir desdites mémoire et communication parmi les unités de moteur électrique.

4. Procédé de contrôle selon la revendication 1, 2 ou 3, **caractérisé en ce que**, si l'étape de détermination indique que moins de la quantité prédéterminée venant de la quantité totale d'inertie de toutes les unités de moteur électrique connectées électriquement l'une à l'autre fonctionne dans le mode de contrôle de vitesse, le changement de mode de contrôle n'est pas effectué.

5. Système de contrôle (41) pour entraîner une unité de moteur électrique (1, 2, 3) soit dans un mode de contrôle de vitesse soit dans un mode de contrôle de charge, et pour changer le mode de contrôle,
**caractérisé en ce que** le système de contrôle comprend
une unité de réception et d'envoi (42) pour envoyer des données de mode de contrôle de l'unité de moteur électrique et pour recevoir des données de mode de contrôle d'autres unités de moteur électrique étant connectées l'une à l'autre et avec l'unité de moteur électrique (1, 2, 3),
une unité de détermination (43) pour déterminer si une somme des moments d'inertie d'unités de moteur électrique fonctionnant dans le mode de contrôle de vitesse représente au moins une quantité prédéterminée du moment d'inertie total de toutes les unités de moteur électrique après le changement de mode de contrôle, en cas de changement de mode de contrôle de l'unité de moteur électrique du mode de contrôle de vitesse au mode de contrôle de charge, l'unité de détermination utilisant des données de mode de contrôle venant de l'unité de réception et d'envoi,
une unité de changement (44) pour changer le mode de contrôle de l'unité de courant électrique, laquelle unité de changement est agencée pour effectuer le changement du mode de contrôle si l'unité de détermination indique qu'au moins ladite quantité prédéterminée est atteinte.

6. Système de commande selon la revendication 5, **caractérisé en ce que** ladite quantité prédéterminée fait au moins la moitié du moment d'inertie total de toutes les unités de moteur électrique connectées électriquement l'une à l'autre.

7. Système de commande selon la revendication 5 ou 6, **caractérisé en ce que** le système de commande comprend une mémoire (45), et ladite inertie de toutes les unités de moteur électrique est utilisée à partir de la mémoire de l'unité de moteur électrique ou à partir desdites mémoire et communication parmi les unités de moteur électrique, ladite unité de réception et d'envoi étant agencée pour envoyer des données d'inertie de l'unité de moteur électrique et pour recevoir des données d'inertie d'autres unités de moteur électrique étant connectées électriquement l'une à l'autre.

8. Système de commande selon la revendication 5, 6 ou 7, **caractérisé en ce que** si l'unité de détermination indique que moins de la quantité prédéterminée venant de la quantité totale d'inertie de toutes les unités de moteur électrique connectées électriquement l'une à l'autre fonctionne dans le mode de contrôle de vitesse, l'unité de changement est agencée pour ne pas effectuer le changement de mode de contrôle.
